# EUROPÄISCHE PATENTSCHRIFT

(11) **EP 3 258 742 B1**
(45) Veröffentlichungstag und Bekanntmachung des Hinweises auf die Patenterteilung: **06.11.2019**
(21) Anmeldenummer: 17171206.0
(22) Anmeldetag: 16.05.2017
(51) Int. Cl.: H05B 6/70, F24C 7/08, H05B 6/64

(54) **VERFAHREN ZUM BETREIBEN EINES GARGERÄTES UND GARGERÄT**
METHOD FOR OPERATING A COOKING DEVICE AND COOKING DEVICE
PROCÉDÉ DESTINÉ AU FONCTIONNEMENT D'UN APPAREIL DE CUISSON ET APPAREIL DE CUISSON

(30) Priorität: 15.06.2016 DE 102016110918
(43) Veröffentlichungstag der Anmeldung: 20.12.2017
(73) Patentinhaber: Miele & Cie. KG, 33332 Gütersloh (DE)
(72) Erfinder: Sillmen, Ulrich, Dr., 33332 Gütersloh (DE); Schmull, Timo, 33775 Versmold (DE)

(56) Entgegenhaltungen:
- EP-A1- 2 637 477
- EP-A1- 2 983 453
- WO-A2-2014/188422

## Beschreibung

Die vorliegende Erfindung betrifft ein Verfahren zum Betreiben eines Gargerätes sowie ein Gargerät mit wenigstens einer Behandlungseinrichtung zur Behandlung von Gargut in wenigstens einem Garraum. Es wird wenigstens eine charakteristische Kenngröße für eine Masse des im Garraum befindlichen Garguts ermittelt.

Zur Erzielung optimaler Garergebnisse ist es in der Regel sehr hilfreich, bestimmte Eigenschaften des Garguts und insbesondere dessen Masse bzw. Gewicht zu berücksichtigen. Solche Informationen über das Gargut sind zudem besonders wichtig für einen zuverlässigen Ablauf von Automatikprogrammen. Beispielsweise sollte bei der Einstellung bzw. programmbasierten Berechnung der Garzeit eines Bratens dessen Gewicht bzw. Größe berücksichtigt werden, sodass der Braten zum Garende weder übergart noch unzureichend gegart wurde.

Eine Möglichkeit, dem Gargerät diese Informationen zur Verfügung zu stellen, ist eine Eingabe durch den Benutzer. Der Benutzer kann z. B. das Gargut wiegen und den entsprechenden Wert über eine Eingabefunktion im Gerät hinterlegen. Eine solche Eingabe bietet aber zum einen eine Fehlerquelle, durch die das Garergebnis ungünstig beeinflusst werden kann, z. B. durch eine Verwechselung von Einheiten zwischen Waage und Gerät. Zum anderen wird das Wiegen und Eingeben häufig als sehr unkomfortabel empfunden.

Eine andere Möglichkeit ist, dass der Benutzer anhand einer Vorwahl ein bestimmtes Gargut angibt. Mit einer solchen Vorwahlautomatik lassen sich grundsätzlich gute Ergebnisse erzielen. Allerdings weist jedes Gargut üblicherweise auch individuelle Eigenschaften auf, sodass es zu Abweichungen gegenüber dem in der Vorwahlautomatik berücksichtigten Gargut kommen kann. Das betrifft insbesondere die Masse bzw. die Größe von Gargut.

Aus der WO 2014/188422 A2 ist es allgemein bekannt, bei einem Gargerät hochfrequente Strahlung über mehrere Antennen in den Garraum einzubringen. Dort werden Streuparameter gemessen und zur Steuerung der Energieabgabe verwendet. Eine ähnliche Methode ist auch bei einem in der EP 2 983 453 A1 beschriebenen Hausgerät bekannt. Dort wird die vom Behandlungsgut beeinflusste und direkt reflektierte Messstrahlung ausgewertet und dadurch eine charakteristische Kenngröße des Behandlungsguts in dem Hausgerät ermittelt. Die EP 2 637 477 A1 beschreibt ein Mikrowellenheizgerät, bei dem die Mikrowellen über eine Transmissionslinie in den Garraum gebracht wird. Sensoren in der Transmissionslinie messen die elektromagnetische Feldstärken, dabei sind die Sensoren so angeordnet, dass die gemessenen Werte mit dem Verhältnis zwischen eingestrahlter und reflektierter Mikrowellenenergie korrelieren. Dieses Verhältnis gibt eine Information über das Gargut.

Es ist die Aufgabe der vorliegenden Erfindung, ein Verfahren zum Betreiben eines Gargerätes und ein Gargerät zur Verfügung zu stellen, welche eine verbesserte und insbesondere komfortable Bestimmung der Masse des Garguts ermöglichen.

Diese Aufgabe wird gelöst durch ein Verfahren mit den Merkmalen des Anspruchs 1 und durch ein Gargerät mit den Merkmalen des Anspruchs 13. Bevorzugte Merkmale sind Gegenstände der Unteransprüche. Weitere Vorteile und Merkmale ergeben sich aus der allgemeinen Beschreibung der Erfindung und der Beschreibung der Ausführungsbeispiele.

Das erfindungsgemäße Verfahren dient zum Betreiben eines Gargerätes. Mit wenigstens einer Behandlungseinrichtung wird Gargut in wenigstens einem Garraum behandelt. Die Behandlungseinrichtung wird in Abhängigkeit wenigstens eines Behandlungsprogramms durch wenigstens eine Steuereinrichtung gesteuert. Es wird wenigstens eine charakteristische Kenngröße für eine Masse des Garguts innerhalb des Garraums ermittelt. Dabei wird hochfrequente Messstrahlung mit einer Mehrzahl von unterscheidbaren Frequenzen und/oder Phasenlagen ausgesendet und wieder empfangen und ausgewertet. Insbesondere wird die aus dem Garraum reflektierte Messstrahlung wieder empfangen und ausgewertet. Anhand eines Vergleichs der empfangenen mit der ausgesendeten Messstrahlung wird frequenzabhängig der frequenzabhängige Amplitudenverlauf und/oder der Phasenverlauf von mindestens einem Streuparameter erfasst. Anhand eines frequenzabhängigen Phasen und/oder AmplitudenVerlaufs des Streuparameters werden im Garraum auftretende Resonanzen bzw. Moden erkannt und charakterisiert. Darüber hinaus gibt insbesondere der Amplitudenverlauf der Streuparameter Auskunft über die Beladung des Garraums. Anhand der charakterisierten Resonanzen und deren frequenzabhängiger Verlauf wird die charakteristische Kenngröße für die Masse des Garguts ermittelt. Die ermittelte Kenngröße wird der Steuereinrichtung zur Verfügung gestellt.

Im Rahmen der vorliegenden Erfindung kann es vorgesehen sein, dass anstelle oder zusätzlich zu der frequenzabhängigen Messung der von HF-Amplituden-Signalen auch eine Erfassung der Phasenlage erfolgt. Dazu müssen die relativen Phasenlagen aller gesendeten und empfangenden Signale bekannt sein.

Das erfindungsgemäße Verfahren hat viele Vorteile. Ein erheblicher Vorteil ist, dass die Masse eines im Garraum liegenden Garguts mittels hochfrequenter Messstrahlung geschätzt wird.

Dadurch ist eine sehr zuverlässige, berührungslose und zugleich für den Benutzer sehr komfortable Massenbestimmung des Garguts möglich. Der Benutzer muss das Gargut nicht selbst wiegen und muss auch keine Gewichtsangaben in das Gargerät eingeben. Das spart Zeit und Aufwand bei der Zubereitung von Speisen und verhindert zudem eine fehlerhafte Gewichtsangabe durch den Benutzer.

Besonders vorteilhaft ist auch, dass zur Massenbestimmung im Garraum u.a. auftretende Resonanzen herangezogen werden. Das ermöglicht eine reproduzierbare Schätzung der Masse, welche zudem mit einer vereinfachten Messtechnik gegenüber einem Netzwerkanalysator umgesetzt werden kann. Beispielsweise kann die zur Erkennung und Auswertung der Resonanzen notwendige Hochfrequenztechnik bzw. Radartechnik mit kostengünstigen Bauteilen und einem kostenbewussten Herstellungsaufwand umgesetzt werden.

Ein weiterer Vorteil ist, dass die ermittelte Kenngröße für die Masse der Steuereinrichtung zur Verfügung gestellt wird. Dadurch kann beispielsweise mittels der Steuereinrichtung das Behandlungsprogramm unter Berücksichtigung der Masse an das Gargut angepasst werden, sodass besonders schmackhafte Garergebnisse erzielt werden können. Vorzugsweise wird die im Behandlungsprogramm vorgesehene Gardauer in Abhängigkeit der ermittelten Masse des Garguts angepasst. Zum Beispiel kann je nach Gewicht des Garguts die Garzeit entsprechend verkürzt und/oder verlängert werden.

Vorzugsweise werden die erkannten Resonanzen in ihrer Anzahl charakterisiert. Dabei kann wenigstens eine Vorgabe herangezogen werden, nach der eine Resonanz mitgezählt wird oder nicht. Beispielsweise kann vorgesehen sein, dass nur Resonanzen ab einer bestimmten Größe mitgezählt werden. Die Bestimmung der Anzahl der erkannten Resonanzen steht in einem engen Zusammenhang mit der im Garraum vorhandenen Masse und kann somit besonders vorteilhaft zur Massenbestimmung des Garguts herangezogen werden.

Es ist besonders bevorzugt, dass bei einer Verringerung der Anzahl der Resonanzen im Vergleich zur Anzahl von Resonanzen in einem unbeladenen Garraum eine Beladung mit einer bestimmten Masse im Garraum angenommen wird. Insbesondere wird ein Maß für die Verringerung der Anzahl der Resonanzen im Vergleich zur Anzahl von Resonanzen im unbeladenen Garraum eine entsprechend größere Kenngröße für die Masse angenommen. Eine solche Zuordnung von Anzahl der Resonanzen und Kenngröße für die Masse ist vorteilhaft, da die Anzahl der Resonanzen in der Regel mit einer Vergrößerung der Masse im Garraum abnimmt.

Möglich und bevorzugt ist auch, dass die erkannten Resonanzen in wenigstens einem Parameter charakterisiert werden. Der Parameter beschreibt vorzugsweise wenigstens einen charakteristischen Funktionsverlauf des Streuparameters als Funktion der Frequenz im Bereich der jeweiligen Resonanz. Ein solcher Funktionsverlauf bietet eine technisch unaufwendige und zugleich sehr zuverlässige Methode zur Erkennung von Resonanzveränderungen im Garraum, welche durch die Masse von eingelegtem Gargut bedingt sind.

Vorzugsweise betrifft der zur Bestimmung der Masse herangezogene Parameter die Frequenzbreite und/oder den Frequenzbereich der jeweiligen Resonanz. Möglich und bevorzugt ist auch, dass der Parameter Extrema und/oder Wendestellen im frequenzabhängigen Funktionsverlauf des Streuparameters im Bereich der jeweiligen Resonanz betrifft. Als Extrema sind insbesondere Hochpunkte und/oder Tiefpunkte bzw. Minima und/oder Maxima des Streuparameters als Funktion der Frequenz vorgesehen. Der Parameter kann auch andere charakteristische Funktionsverläufe des Streuparameters als Funktion der Frequenz im Frequenzbereich der Resonanz betreffen, beispielsweise die Steigung und/oder wenigstens einen Sattelpunkt und/oder einen Flachpunkt und/oder wenigstens eine Asymptote. Möglich ist auch, dass der Parameter einen charakteristischen Funktionsverlauf des Streuparameters als Funktion der Frequenz außerhalb des Frequenzbereichs der Resonanz betrifft.

Es ist ebenfalls möglich, dass die erkannten Resonanzen in wenigstens einem Parameter charakterisiert werden, welcher eine Frequenzverschiebung der jeweiligen Resonanz gegenüber einer vergleichbaren Resonanz in einem unbeladenen Garraum beschreibt. Besonders bevorzugt wird dazu eine Frequenzverschiebung der Extrema des Streuparameters im Bereich der Resonanz herangezogen. Die Resonanz im unbeladenen Garraum kann vor dem Beladen des Garraums gemessen werden und/oder werksseitig hinterlegt sein. Die hier vorgestellten Parameter können besonders gut zur Bestimmung der Masse herangezogen werden, da diese da diese zuverlässig identifizierbare Veränderungen im Funktionsverlauf des Streuparameters aufzeigen, wenn der Garraum mit einer bestimmten Masse beladen ist.

In allen Ausgestaltungen ist es möglich, dass die Anzahl der Resonanzen und/oder dass der Parameter mit wenigstens einem hinterlegten Vergleichsparameter verglichen werden. Insbesondere wird anhand eines Ergebnisses des Vergleichs dem Gargut die Kenngröße für die Masse zugeordnet. Der Vergleichsparameter ist insbesondere empirisch bestimmt. Beispielsweise kann zuvor unter entsprechend genau definierten Bedingungen des Garraums und der eingelegten Masse ein Vergleichsparameter und vorzugsweise eine Vielzahl von Vergleichsparameter bestimmt werden. Bevorzugt erfolgt die Zuordnung des Ergebnisses des Vergleichs zu einer Kenngröße für eine Masse durch wenigstens eine Näherungsfunktion und/oder Optimierungsfunktion. Beispielsweise wird wenigstens eine Fit-Funktion eingesetzt.

Möglich ist auch, dass die Anzahl der Resonanzen und/oder dass der Parameter anhand wenigstens einer Zuordnungsfunktion wenigstens einer hinterlegten Kenngröße für die Masse zugeordnet wird. Diese hinterlegte und zugeordnete Kenngröße wird dann insbesondere als die zu ermittelnde Masse des Garguts angenommen. Die Zuordnungsfunktion beschreibt insbesondere den Zusammenhang zwischen der Anzahl der Resonanzen und/oder zwischen dem Parameter und der zu ermittelnde Masse des Garguts. Eine solche Zuordnungsfunktion hat den Vorteil, dass auf hinterlegte Vergleichsparameter verzichtet werden kann. Beispielsweise ist ein Polynom als Funktion vorgesehen.

In einer vorteilhaften Ausgestaltung ist es möglich, dass zur Bestimmung der Kenngröße der Masse wenigstens zwei Kriterien herangezogen werden. Die beiden Kriterien umfassen vorzugsweise die Anzahl der Resonanzen und wenigstens einen für die Resonanzen charakteristischen Parameter. Möglich ist aber auch, dass die beiden Kriterien wenigstens zwei verschiedene Parameter umfassen, welche die Resonanzen charakterisieren. Es können auch drei oder vier oder eine Mehrzahl von Kriterien zur Bestimmung der Kenngröße der Masse herangezogen werden. Durch die Beachtung von zwei oder mehr Kriterien kann die Masse des Garguts besonders reproduzierbar geschätzt werden.

Die einzelnen Kriterien werden bevorzugt normiert und/oder gewichtet miteinander verrechnet. Beispielsweise wird ein Mittelwert oder ein gewichteter Mittelwert der Kriterien bestimmt und zur Bestimmung der Kenngröße der Masse eingesetzt. Möglich ist aber auch, dass anhand jeweils eines Kriteriums eine separate Kenngröße für die Masse ermittelt wird. Die separaten Kenngrößen können anschließend zu einer gemittelten Kenngröße der Masse miteinander verrechnet werden. Beispielsweise wird anhand der Anzahl der Resonanzen die Kenngröße für die Masse ermittelt. Zudem wird anhand der Frequenzbreite der Resonanz die Kenngröße für die Masse ermittelt. Anschließend kann aus den Kenngrößen ein Mittelwert gebildet werden, welcher dann als die zu ermittelnde Masse des Garguts angenommen wird.

In allen Ausgestaltungen ist es bevorzugt, dass die Messstrahlung eine Frequenzbreite umfasst, welche eine Ausbreitung von wenigstens zehn Moden im unbeladenen Garraum bietet. Möglich ist auch, dass die Frequenzbreite der Messstrahlung eine Ausbreitung von wenigstens drei Moden im unbeladenen Garraum bietet. Besonders bevorzugt umfasst die Messstrahlung eine Frequenzbreite, welche eine Ausbreitung von wenigstens 15 oder auch wenigstens 20 oder wenigstens 30 oder mehr Moden im unbeladenen Garraum bietet. Eine solche Frequenzbreite der Messstrahlung hat den Vorteil, dass Reproduzierbarkeit der Massenbestimmung erhöht wird.

Zur Bestimmung der ausbreitungsfähigen Moden im unbeladenen Garraum kann vorgesehen sein, dass ein wenigstens teilweise idealisierter Garraum herangezogen wird. Beispielsweise kann ein solcher Garraum ohne die sonst im Gargerät üblichen Heizquellen und/oder Gargutträgeraufnahmen ausgestattet sein. Dadurch kann eine besonders unaufwendige und ausreichend genaue Bestimmung der ausbreitungsfähigen Moden bei einer bestimmten Frequenzbreite der Messstrahlung erfolgen. Möglich ist aber auch, dass die Anzahl der ausbreitungsfähigen Moden bei einer gegebenen Frequenzbreite der Messstrahlung in einem tatsächlich vorgesehenen Garraum empirisch bestimmt wird.

Besonders bevorzugt liegt die Messstrahlung im Mikrowellenbereich. Die Messstrahlung ist insbesondere eine Radarstrahlung. Insbesondere liegt die Messstrahlung in einem Frequenzbereich wenigstens eines ISM Bandes. Beispielsweise liegt die Messstrahlung in einem Frequenzbereich zwischen 2,4 GHz und 2,5 GHz. Die Messstrahlung kann auch in einem Frequenzbereich zwischen 902 MHz bis 928 MHz liegen. Möglich ist auch, dass die Messstrahlung zwei oder mehr Bänder umfasst. Möglich ist aber auch, dass Messstrahlung mit einem Frequenzbereich außerhalb von ISM-Bändern eingesetzt wird. Besonders bevorzugt wird dazu Messstrahlung mit einer entsprechend geringen Hochfrequenzleistung eingesetzt, welche für Messzwecke, aber beispielsweise nicht zur dielektrischen Erwärmung des Garguts geeignet ist.

Die unterscheidbaren Frequenzen und/oder Phasenlagen können gleichzeitig oder auch zeitlich beabstandet in den Garraum ausgesendet werden. Dabei können die unterscheidbaren Frequenzen eine Schrittweite von maximal 100 MHz und insbesondere von maximal 10 MHz und besonders bevorzugt von 1 MHz oder weniger aufweisen. Bei einer solchen Schrittweite können in den entsprechenden Bändern besonders aussagekräftige Messwerte erzielt werden. Die Messstrahlung kann auch mit wenigstens zwei und vorzugsweise einer Mehrzahl an unterscheidbaren Phasenlagen gesendet und/oder empfangen werden.

Bevorzugt umfasst die Messstrahlung wenigstens zwei sich um wenigstens 100 MHz unterscheidende Frequenzen zwischen 100 Megahertz und 10 Terahertz. Vorzugsweise sind mehrere und insbesondere eine Vielzahl von verschiedenen Frequenzen vorgesehen. Die Vielzahl der Frequenzen umfasst insbesondere Frequenzen, welche sich um bis zu 0,1 MHz oder bis zu 1 MHz oder bis zu 10 MHz unterscheiden. Dabei können auch Frequenzen und/oder Frequenzintervalle vorgesehen sein, welche aneinandergrenzen und/oder sich wenigstens teilweise überlappen. Die Messstrahlung kann eine Frequenzbreite von wenigstens 10 % der Mittenfrequenz des eingesetzten Frequenzbandes aufweisen. Möglich ist auch eine Frequenzbreite von mindestens 10 % des arithmetischen Mittelwertes von unterer und oberer Grenzfrequenz des genutzten Frequenzbandes. Bevorzugt ist eine Frequenzbreite von mindestens 20 % des entsprechenden arithmetischen Mittelwertes. Die Frequenzbreite umfasst insbesondere wenigstens 250 Megahertz und vorzugsweise wenigstens 500 Megahertz und/oder wenigstens ein Gigahertz und/oder wenigstens 5 Gigahertz und besonders bevorzugt mehr als 10 Gigahertz. Möglich sind auch 20 Gigahertz oder mehr.

Insbesondere wird die Messstrahlung als ultrakurzer Puls ausgesendet. Besonders bevorzugt sind die Sendeeinrichtung und/oder die Empfangseinrichtung dazu ausgebildet und geeignet, ultrabreitbandige Signale zu senden bzw. zu empfangen. Auch die Verarbeitungseinrichtung ist vorzugsweise zur Auswertung ultrabreitbandiger Signale ausgebildet. Dabei ist die Impulsdauer insbesondere kürzer als eine Nanosekunde. Die Impulsdauer ist vorzugsweise im Bereich von hundert oder weniger Picosekunden. Besonders bevorzugt umfasst das Messsystem wenigstens eine Ultrabreitbandradareinrichtung und/oder ist als eine solche ausgebildet. Insbesondere umfasst die Ultrabreitbandradareinrichtung wenigstens einen Radarsensor und vorzugsweise einen frequenzmodulierten Dauerstrich-Radarsensor.

Es ist möglich, dass die Frequenzen und/oder die Frequenzbreite der Messstrahlung in Abhängigkeit des Parameters der Resonanz für eine erneute Messung angepasst werden. Beispielsweise kann die Frequenzbreite der Messstrahlung erhöht werden, wenn in einer zuvor durchgeführten Messung eine Resonanz durch den Parameter nicht genau genug nicht ausreichend genau charakterisiert wird.

Es ist möglich, dass die Frequenzabhängigkeit des Streuparameters in definierten Schrittabständen bestimmt wird. Vorzugsweise ist die Frequenzbreite eines Schrittabstandes kleiner als die Frequenzbreite und vorzugsweise mindestens um Faktor fünf kleiner als die Frequenzbreite der im unbeladenen Garraum auftretenden Resonanzen und insbesondere als der Frequenzbreite der Maxima und/oder Minima und/oder Wendepunkte der auftretenden Resonanzen. Vorzugsweise gibt es wenigstens einen und insbesondere mehrere Frequenzbereiche mit derartig zusammenhängenden kleinen Schrittabständen. Dabei ist möglich, dass die Schrittabstände mit derart kleinen Frequenzbreiten beliebig über den eingesetzten Frequenzbereich verteilt sind. Möglich ist auch eine definierte Verteilung.

Der Streuparameter kann in Reflexion und/oder Transmission erfasst werden. Dazu kann ein Messsystem vorgesehen sein, welches wenigstens ein Reflektometer und/oder wenigstens einen Radarsensor umfasst. Es kann ein Eintor- und/oder ein Mehrtor-Reflektometer vorgesehen sein.

Der Streuparameter betrifft insbesondere die Amplitude und/oder Phase und/oder deren Betrag. Der Streuparameter kann auch wenigstens eine andere charakteristische Größe für eine Welleneigenschaft der Messstrahlung betreffen. Es ist möglich, dass zwei oder mehr verschiedene Streuparameter herangezogen werden. Beispielsweise kann ein Streuparameter in Eingangsreflexion und/oder Vorwärtstransmission oder in anderen Konstellationen gemessen werden. Zur Erkennung der Resonanzen kann der Streuparameter in der komplexen Ebene und/oder im Amplitudengang und/oder im Phasengang betrachtet werden.

Die Behandlungseinrichtung ist vorzugsweise dazu geeignet und ausgebildet, hochfrequente Behandlungsstrahlung zur Behandlung des Garguts und insbesondere zur dielektrischen Erwärmung des Garguts zu erzeugen und auszusenden. Insbesondere ist die Behandlungseinrichtung auch dazu geeignet und ausgebildet, die Messstrahlung zu erzeugen. Bevorzugt wird die Messstrahlung mit der Behandlungseinrichtung erzeugt, mit welcher auch das Gargut dielektrisch erwärmt wird. Dabei ist die Leistung der Messstrahlung vorzugsweise um ein Vielfaches geringer als die Leistung der Behandlungsstrahlung. Beispielsweise ist die Messstrahlung um Faktor 100 und insbesondere um Faktor 1000 und besonders bevorzugt um Faktor 10.000 geringer als die Leistung der Behandlungsstrahlung.

Bevorzugt ist zudem, dass die Bandbreite der Messstrahlung größer ist als die Bandbreite der Behandlungsstrahlung. Die Bandbreite der Behandlungsstrahlung liegt vorzugsweise innerhalb eines ISM Bandes. Es ist möglich, dass die Behandlungsstrahlung zeitgleich oder zeitversetzt zur Messstrahlung erzeugt wird und ausgesendet wird.

Möglich ist aber auch, dass die Messstrahlung mit einem dazu vorgesehenen Messsystem erzeugt wird. Dabei ist möglich, dass das Messsystem und die Behandlungseinrichtung jeweils eine eigene Hochfrequenzeinrichtung zur Erzeugung der hochfrequenten Strahlung umfassen.

In einer Ausgestaltung ist es möglich, dass die Behandlungseinrichtung wenigstens eine thermische Heizquelle zur Behandlung des Garguts umfasst. Dabei kann die thermische Heizquelle zusätzlich zu einer dielektrischen Erwärmung des Garguts eingesetzt werden. Möglich ist aber auch, dass ausschließlich eine Behandlung des Garguts mit der thermischen Heizquelle vorgesehen ist. In einer solchen Ausgestaltung ist das Gargerät beispielsweise als ein Backofen ohne eine Mikrowellenfunktion ausgebildet. Dann ist zur Erzeugung der Messstrahlung insbesondere das Messsystem vorgesehen.

Die Kenngröße für die Masse kann in Kombination mit wenigstens einer weiteren Gargutkenngröße berücksichtigt werden. Die weitere Kenngröße kann beispielsweise von einem Benutzer eingegeben werden. Möglich ist auch, dass die weitere Kenngröße anhand der Auswertung der empfangenen Messstrahlung ermittelt wird. Die weitere Kenngröße beschreibt beispielsweise die Art des Garguts, zum Beispiel ob es sich um Kuchen, Fleisch oder Gemüse handelt. Anhand der Kenngröße für die Masse und der weiteren Gargutkenngröße kann wenigstens eine dritte Kenngröße wenigstens näherungsweise ermittelt werden. So kann anhand der berechneten Masse und der Art des Garguts zum Beispiel das Volumen oder der Wassergehalt als dritte Kenngröße berechnet werden. Durch das Heranziehen bzw. Bestimmen weiterer Kenngrößen für das Gargut kann eine besonders aussagekräftige Charakterisierung des Garguts erfolgen. Dadurch kann eine besonders gezielte Auswahl bzw. Anpassung des Behandlungsprogramms erfolgen.

In allen Ausgestaltungen ist es bevorzugt, dass dem Benutzer die ermittelte Kenngröße der Masse angezeigt wird. Beispielsweise kann die Ausgabe in einer Anzeigeeinrichtung und zum Beispiel über ein Display erfolgen. Es ist möglich, dass die ermittelte Kenngröße der Masse wenigstens teilweise durch den Benutzer angepasst werden kann. Dabei wird die angepasste Kenngröße der Steuereinrichtung bereitgestellt und insbesondere für eine Anpassung des Behandlungsprogramms berücksichtigt. Möglich ist auch, dass dem Benutzer in Abhängigkeit der geänderten Kenngröße für die Masse des Garguts wenigstens ein weiteres Behandlungsprogramm vorgeschlagen wird. Möglich ist auch, dass der Benutzer ein ausgewähltes oder vorgeschlagenes Behandlungsprogramm wenigstens teilweise anpassen kann.

Es ist möglich und bevorzugt, dass die Ermittlung der Kenngröße für die Masse bei einem Verschließen des Garraums automatisch durchgeführt wird. Insbesondere wird die Ermittlung der Kenngröße mit jedem Schließen erneut ermittelt. Möglich ist aber auch, dass die Ermittlung der Kenngröße durch wenigstens eine Benutzereingabe ausgelöst werden kann.

Insbesondere wird bei einer ermittelten Kenngröße für die Masse unterhalb eines Schwellenwertes ein unbeladener Garraum angenommen. Bei einem unbeladenen Garraum erfolgt vorzugsweise ein Warten auf ein erneutes Betätigen der Garraumtür. Es kann auch wenigstens ein Hinweis an den Benutzer ausgegeben werden. Möglich ist auch, dass die Auswahl bestimmter Betriebsfunktionen gesperrt ist.

In allen Ausgestaltungen ist es besonders bevorzugt, dass während eines Behandlungsprogramms eine Vielzahl von Zyklen mit jeweils wenigstens einer Messphase und jeweils wenigstens einer Behandlungsphase ausgeführt werden. In der Messphase wird insbesondere die Messstrahlung ausgesendet. Der Behandlungsphase wird insbesondere eine hochfrequente Behandlungsstrahlung zur Behandlung des Garguts und insbesondere zur dielektrischen Erwärmung des Garguts ausgesendet. Die Messphase ist vorzugsweise um ein Vielfaches kürzer als die Behandlungsphase. Beispielsweise dauert die Behandlungsphase wenigstens um Faktor zehn und bevorzugt um Faktor 100 und insbesondere um Faktor 1000 länger als die Messphase. Durch solche Zyklen aus Messphasen und Behandlungsphasen sind eine besonders effektive Erwärmung des Garguts und zugleich eine fortlaufende Anpassung der Behandlung an das jeweilige Messergebnis möglich. Beispielsweise kann so das Behandlungsprogramm während der Behandlung in Abhängigkeit an veränderte Werte für die Masse des Garguts angepasst werden, beispielsweise wenn Wasser aus dem Gargut verdampft.

Vorzugsweise wird während eines laufenden Behandlungsprogramms wenigstens einmal eine weitere Ermittlung der Kenngröße für die Masse durchgeführt. Dabei kann die Messstrahlung periodisch oder in unregelmäßig definierten Zeitabständen ausgesendet werden. Vorzugsweise wird anhand der erneut ermittelten Kenngröße für die Masse das laufende Behandlungsprogramm wenigstens teilweise erneut angepasst.

Das erfindungsgemäße Gargerät umfasst wenigstens eine Behandlungseinrichtung zur Behandlung von Gargut in wenigstens einem Garraum. Das Gargerät umfasst wenigstens eine Steuereinrichtung zur Steuerung der Behandlungseinrichtung in Abhängigkeit wenigstens eines Behandlungsprogramms. Mit wenigstens einem Messsystem ist wenigstens eine charakteristische Kenngröße für eine Masse des Garguts ermittelbar. Dabei ist das Messsystem dazu geeignet und ausgebildet, hochfrequente Messstrahlung mit einer Mehrzahl von unterscheidbaren Frequenzen in den Garraum auszusenden und wieder zu empfangen und auszuwerten. Das Messsystem ist dazu geeignet und ausgebildet, anhand eines Vergleichs der empfangenen mit der ausgesendeten Messstrahlung frequenzabhängig wenigstens einen Streuparameter zu erfassen und anhand eines frequenzabhängigen Verlaufs des Streuparameters im Garraum auftretende Resonanzen zu erkennen und zu charakterisieren. Das Messsystem ist dazu geeignet und ausgebildet, daraus die charakteristische Kenngröße für die Masse des Garguts zu ermitteln und der Steuereinrichtung zur Verfügung zu stellen.

Auch das erfindungsgemäße Gargerät bietet viele Vorteile. Ein besonderer Vorteil ist, dass das Gargerät eine zuverlässige und komfortable Erfassung der Masse des Garguts bietet. Dadurch können mit dem Gargerät besonders schmackhafte Garergebnisse erzielt werden, da der Garvorgang gezielt an die Masse bzw. Größe des Garguts angepasst wird.

Weitere Vorteile und Merkmale der vorliegenden Erfindung ergeben sich aus den Ausführungsbeispielen, welche im Folgenden mit Bezug auf die beiliegenden Figuren erläutert werden.

In den Figuren zeigen:
- Figur 1: eine rein schematische Darstellung eines erfindungsgemäßen Gargerätes in einer Vorderansicht;
- Figur 2: eine rein schematische Darstellung eines weiteren erfindungsgemäßen Gargerätes in einer Vorderansicht;
- Figur 3: eine stark schematische Darstellung eines frequenzabhängigen Verlaufs eines Streuparameters mit auftretenden Resonanzen in einem unbeladenen Garraum; und
- Figur 4: eine stark schematische Darstellung eines frequenzabhängigen Verlaufs eines Streuparameters mit auftretenden Resonanzen in einem beladenen Garraum.

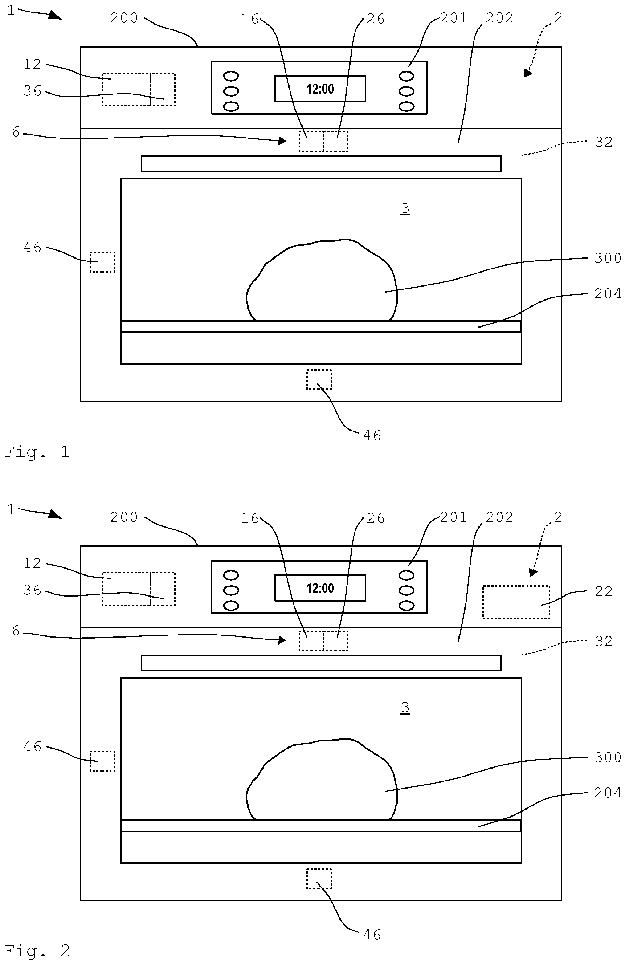

Die Figur 1 zeigt ein erfindungsgemäßes Gargerät 1, welches hier als ein Backofen 200 ausgeführt ist. Das Gargerät 1 wird nach dem erfindungsgemäßen Verfahren betrieben. Das Gargerät 1 ist hier als ein Einbaugerät vorgesehen. Möglich ist auch, dass das Gargerät 1 als ein Herd bzw. Standgerät ausgebildet ist. Das Gargerät 1 hat einen Garraum 3, welcher durch eine Tür 202 verschließbar ist. Im Garraum 3 befindet sich ein Gargut 300 auf einem Gargutträger 204. Als Gargut wird im Rahmen der vorliegenden Erfindung insbesondere jede Art von Behandlungsgut bezeichnet, z. B. auch Auftaugut. Der Gargutträger 204 ist auf einer hier nicht sichtbaren Gargutträgeraufnahme eingeschoben.

Zur Zubereitung des Garguts 300 ist eine Behandlungseinrichtung 2 vorgesehen. Die Behandlungseinrichtung 2 umfasst eine Heizeinrichtung 32 mit mehreren Heizquellen, die in der hier dargestellten Ansicht nicht sichtbar im Garraum 3 bzw. Geräteinneren angeordnet sind. Für die Beheizung des Garraums 3 stellt die Heizeinrichtung 32 verschiedene Heizquellen zur Verfügung. Möglich ist unter anderem das Beheizen mit einer Umluftheizquelle, mit Ober- und Unterhitze, im Heißluftbetrieb und/oder mit einer Grillfunktion. Möglich ist auch, dass der Backofen 200 als ein Kombigerät mit einer Mikrowellenfunktion und/oder einer Dampfgarfunktion ausgebildet ist.

Das Gargerät 1 umfasst hier eine Steuereinrichtung 12 zur Steuerung bzw. Regelung der Behandlungseinrichtung 2 sowie weiterer vorgesehener Gerätefunktionen. Mittels der Steuereinrichtung 12 wird beispielsweise die Heizleistung der Heizquellen so eingestellt, dass im Garraum 3 Temperaturen vorliegen, welche im Bereich einer geforderten Solltemperatur liegen. Über die Steuereinrichtung 12 sind zudem verschiedene Betriebsarten und vorzugsweise verschiedene Behandlungsprogramme und Automatikfunktionen ausführbar.

Das Gargerät 1 ist hier über eine Bedieneinrichtung 201 bedienbar. Beispielsweise kann darüber die Betriebsart, die Betriebstemperatur und/oder ein Behandlungsprogramm bzw. eine Automatikfunktion ausgewählt und eingestellt werden. Die Bedieneinrichtung 201 umfasst hier eine Anzeigeeinrichtung, über die dem Benutzer Informationen über den Betriebsablauf und den Garvorgang angezeigt werden. Über die Bedieneinrichtung 201 kann der Benutzer auch Eingaben vornehmen, beispielsweise um Informationen über das Gargut 300 im Gargerät 1 zu hinterlegen. Die Bedieneinrichtung 201 kann dazu eine oder mehrere Tasten aufweisen und/oder als eine berührungsempfindliche Oberfläche bzw. Touchscreen ausgestaltet sein.

Das Gargerät 1 weist ein Messsystem 6 auf, welches hier stark schematisiert dargestellt ist. Das Messsystem 6 ist zur berührungslosen Ermittlung einer charakteristischen Kenngröße für eine Masse des Garguts 300 vorgesehen. Das Messsystem 6 umfasst hier eine Sendeeinrichtung 16 und eine Empfangseinrichtung 26 sowie eine Auswerteeinrichtung 36. Mit der Sendeeinrichtung 16 wird elektromagnetische Messstrahlung und insbesondere Radarstrahlung erzeugt und über die Antenne 46 in den Garraum 3 gesendet. Die reflektierte und/oder transmittierte Messstrahlung wird von der Empfangseinrichtung 26 wieder empfangen. Die Messungen erfolgen vorzugsweise in Reflexion und/oder Transmission.

Die Sendeeinrichtung 16 und die Empfangseinrichtung 26 können als ein Eintor-Reflektometer oder auch als ein Mehrtor-Reflektometer ausgebildet sein. Die Sendeeinrichtung 16 und die Empfangseinrichtung 26 können auch durch einen Radarsensor zur Verfügung gestellt werden oder einen solchen umfassen. Das Messsystem 6 kann auch als eine Ultrabreitbandradareinrichtung ausgebildet sein. Dann ist insbesondere ein ultrabreitbandiger Radarsensor vorgesehen.

Eine große Bandbreite ermöglicht eine hohe Ortsauflösung und einen geringen Mindestmessabstand, was besonders in kleinen Garräumen 3 von Vorteil ist. Es können auch eine oder mehrere weitere Antennen 46 zum Senden und/oder Empfangen der Messstrahlung vorgesehen sein. In einer vorteilhaften Ausgestaltung umfasst das Messsystem 6 wenigstens einen Richtkoppler für jeden Kanal und wenigstens zwei Hochfrequenz-Leistungsdetektoren. Zudem können auch Korrekturglieder, Verstärker und/oder Phasenmesssysteme, wie z. B. IQ-Demodulatoren, vorgesehen sein.

Zur Bestimmung der Kenngröße für die Masse des im Garraum 3 befindlichen Garguts 300 sendet das Messsystem 6 zeitversetzt oder zeitgleich Messstrahlung mit einer Mehrzahl von unterscheidbaren Frequenzen. Das Messsystem 6 verfügt dazu über wenigstens eine Frequenz-durchstimmbare Hochfrequenzeinrichtung. Zudem kann das Messsystem 6 zur gezielten Veränderung der Phasenlage der Messstrahlung geeignet und ausgebildet sein. Dabei wird von dem Messsystem 6 wenigstens eine charakteristische Welleneigenschaft der Messstrahlung erfasst, beispielsweise die Amplitude, Frequenz und/oder Phase. Anhand eines Vergleichs der empfangenen mit der ausgesendeten Messstrahlung wird wenigstens ein Streuparameter 4 frequenzabhängig erfasst.

Der Streuparameter 4 gibt bei einer bestimmten Frequenz das Verhältnis von empfangender Welle zu gesendeter Welle an. Anhand der Erfassung von Amplitude und Phase der gesendeten und empfangenen Wellen wird die Streuung ermittelt. Die Amplitude und die Phasenlage der auslaufenden Wellen unterscheiden sich von denen der einlaufenden Wellen. Ein Streuparameter 4 enthält daher Amplituden- und Phaseninformation. Diese sind bei gleichbleibender Frequenz in der Regel linear. Die gemessenen Streuparameter 4 hängen also im Wesentlichen nicht von der Sendeleistung ab. Bei unterschiedlicher Frequenz ändert sich die Streuung jedoch charakteristisch, da sich auch das Verhältnis von Wellenlänge zu den Garraumdimensionen verändert und somit eine neue Feldverteilung im Garraum 3 entsteht.

Bei einem Eintor-System wird vorzugsweise die Reflexion an der Empfangseinrichtung 26 gemessen. Sind mehrere Empfangseinrichtungen 26 bzw. Antennen 46 im Garraum 3 angeordnet, z. B. als Mehrtor-System, kann neben den Reflexionen auch die Transmission zwischen den Empfängern gemessen werden. Zum Beispiel vervierfacht sich daher die Anzahl der auswertbaren Messdaten bei der Installation einer zweiten Empfangseinrichtung 26 bzw. Antenne 46.

Bevorzugt wird eine breitbandige Messung durchgeführt. Die Sendeleistung kann dabei sehr gering sein, da die Streuparameter bezüglich der Leistung linear sind. Das bietet Vorteile bezüglich der Einhaltung von Vorschriften für die Nutzung von Frequenzbereichen. Ein weiterer Vorteil ist, dass bei einem Scan mit einer großen Bandbreite mehr Moden angeregt werden. Dadurch kann eine hohe Genauigkeit erreicht werden. Es kann das ISM-Band bei 2,45 GHz verwendet werden. Dieses weist eine vorteilhafte Frequenzbreite von 100 MHz auf. Zudem können aufgrund der Wellenlänge eine günstige Anzahl Moden im Garraum 3 entstehen. Möglich ist auch, dass für eine möglichst große Bandbreite mit sehr geringer Hochfrequenzleistung außerhalb von ISM Bändern gemessen wird.

Die unterscheidbaren Frequenzen der Messstrahlung können zeitlich nacheinander ausgesendet werden, z. B. als Frequenzscan. Es ist auch möglich, dass statt eines Frequenzscans bzw. eines zeitversetzten Aussendens unterscheidbarer Frequenzen mit einem ultrakurzen Puls gemessen wird. Dadurch kann eine besonders große und vorteilhafte Frequenzbreite erreicht werden. Dazu werden vorzugsweise für jede Sendeeinrichtung 16 bzw. Antenne 46 der Sendepuls und der verformte reflektierte Puls als Funktion der Frequenz in Bezug auf Betrag und Phase verglichen und ausgewertet. Das Pulsverfahren ist z. B. mit sogenannten UWB-Radarsensoren möglich.

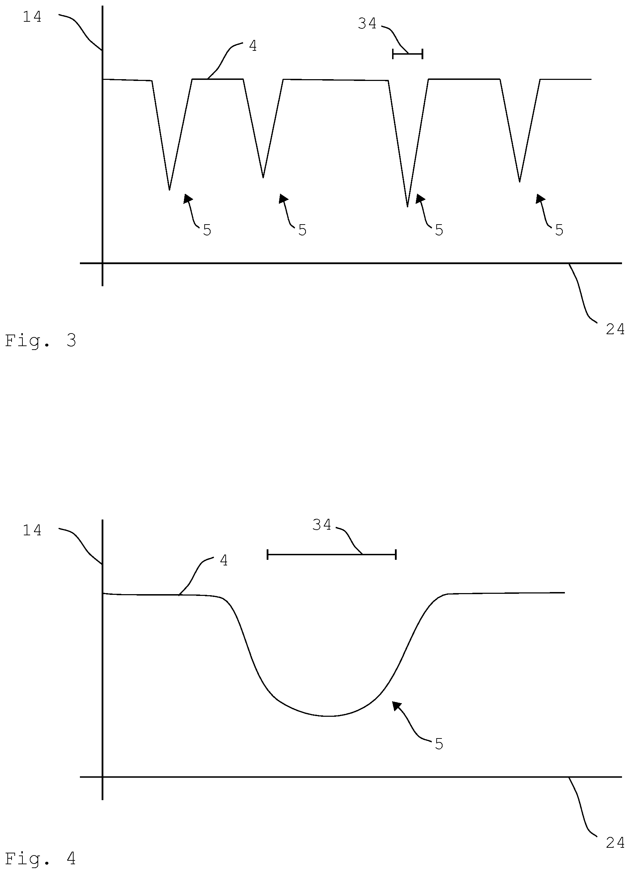

Anhand des frequenzabhängigen Verlaufs des Streuparameters werden dann die im Garraum auftretenden Resonanzen 5 durch die Auswerteeinrichtung 36 erkannt und charakterisiert. Dazu können die Streuparameter 4 vorzugsweise mittels wenigstens einer Korrekturfunktion in die gewünschte Messebene verlegt werden. Die Auswertung der Resonanzen 5 liefert die charakteristische Kenngröße für die Masse des Garguts. Die Auswertung wird mit Bezug zu Fig. 3 und 4 näher beschrieben.

Die ermittelte Kenngröße für die Masse wird der Steuereinrichtung 12 zur Verfügung gestellt. Die ermittelte Kenngröße wird beispielsweise von der Steuereinrichtung 12 bei der Einstellung der Behandlungseinrichtung 2 und insbesondere der Heizeinrichtung 32 berücksichtigt.

Beispielsweise werden die Gardauer und/oder die Heizleistung anhand der Masse des eingelegten Garguts 300 eingestellt. Für den Mikrowellenbetrieb wird z. B. die erforderliche Energiemenge abgeleitet (Sollwert), die in das Lebensmittel einzubringen ist, um eine gewünschte Kerntemperatur zu erreichen. Diese ergibt sich aus der ermittelten Masse und den thermischen Eigenschaften der Art des Lebensmittels, z. B. der spezifischen Wärmekapazität und Leitfähigkeit. Die Information über die Art des Lebensmittels wird vorzugsweise vom Benutzer über die Bedieneinrichtung 201 eingegeben. Der aktuelle Istwert, der in das Lebensmittel eingetragenen Energiemenge ergibt sich insbesondere aus der anhand der Masse berechneten, im Garraum absorbierten Leistung und deren Aufsummierung über die Gardauer.

Aus der Kenngröße und der Angabe, welche Art Gargut 300 sich im Garraum 3 befindet, kann z. B. eine Vorwahl für mehrere Garparameter vorgeschlagen werden. Beispielsweise kann die berechnete Gardauer oder eine eingestellte Garraumtemperatur angezeigt werden. Es kann auch erkannt werden, dass der Garraum 3 unbeladen ist. Dann kann auf ein erneutes Betätigen der Tür 202 gewartet werden, um z. B. erneut zu messen.

In der Figur 2 ist ein Gargerät 1 gezeigt, welches als ein Kombigerät 200 mit einer Backofen- und Mikrowellenfunktion ausgebildet ist. Dazu umfasst die Behandlungseinrichtung 2 neben der Heizeinrichtung 32 auch eine Hochfrequenzeinrichtung 22 zur Erzeugung von hochfrequenter Behandlungsstrahlung zur dielektrischen Erwärmung des Garguts 300. Die Hochfrequenzeinrichtung 22 dient hier zudem zur Erzeugung der Messstrahlung. Dadurch ist für das Messsystem 6 keine eigene Hochfrequenzquelle nötig. Es kann aber auch eine zusätzliche Hochfrequenzeinrichtung 22 zur Erzeugung der Messstrahlung vorgesehen sein. Das Gargerät 1 kann auch nur mit einer Mikrowellenfunktion und ohne eine Heizeinrichtung 32 ausgestattet sein. Die Behandlungsstrahlung und die Messstrahlung werden zum Beispiel in Zyklen mit bestimmten Sendedauern ausgesendet.

Mit Bezug zu den Figuren 3 und 4 wird nachfolgend eine exemplarische Auswertung eines erfassten Streuparameters 4 beschrieben. Der Streuparameter 4 ist hier im Amplitudengang dargestellt. Dazu wurde die Amplitude 14 gegen die Frequenz 24 aufgetragen. Die komplexen Streuparameter können auch in der komplexen Ebene oder im Phasengang dargestellt werden.

Die Figur 3 zeigt den Streuparameter 4 im unbeladenen Garraum 3. Dort treten im Frequenzverlauf des Streuparameters 4 eine Mehrzahl von Moden bzw. Resonanzen 5 auf, welche an charakteristischen Amplitudenänderungen zu erkennen sind. Die Resonanzen 5 sind z. B. durch Schleifen in der komplexen Ebene und daraus resultierend auch durch Minima im Amplitudengang und Wendepunkte im Phasengang zu erkennen. Wenn der Garraum 3 unbeladen ist, sind mehrere schmalbandige Resonanzen 5 bzw. Moden erkennbar, bei denen der Garraum 3 zu schwingen anfängt (Resonator hoher Güte).

In der Figur 4 ist der Garraum 3 mit Gargut 300 mit einer bestimmten Masse beladen. Dadurch treten im Frequenzverlauf des Streuparameters 4 deutlich weniger Moden bzw. Resonanzen 5 auf. Zudem ist die Frequenzbreite 34 der Resonanz 5 gegenüber dem unbeladenen Garraum 3 charakteristisch vergrößert. Als Frequenzbreite 34 kann z. B. die Halbwertsbreite herangezogen werden. Bei größeren Garraumbeladungen sind die Resonanzen 5 breit gezogen, weniger tief und die Frequenzen der Minimumpositionen sind verschoben (Resonator geringer Güte).

Die Schmalbandigkeit begründet sich insbesondere darauf, dass Wellenlänge und Garraumdimensionen bei einem leeren Garraum 3 in einem sehr genauen Verhältnis stehen müssen, um die Resonanz ausbilden zu können. Man spricht in diesem Fall von Eigenmoden des leeren Garraums. Im Gegensatz dazu sind die Minima bei größerer Garraumbeladung zunehmend breitbandiger (weniger spitz), weniger tief und verschieben sich. Die Feldverteilung von Eigenmoden des leeren Garraums dominieren nicht mehr. Die Feldverteilung bleibt über einen weiten Frequenzbereich ähnlich.

Die erkannten Resonanzen 5 bei unterschiedlichen Garraumlasten werden in Kriterien überführt, die in eine Kenngröße für die Masse umgerechnet werden können. Zudem können die Kriterien auch in ein Volumen oder andere sich daraus ergebene Kenngrößen umgerechnet. Diese werden dem Benutzer und/oder der Steuereinrichtung 12 für den Garprozess zur Verfügung gestellt.

Beispielsweise ist die Anzahl der Minima der Streuparameter-Amplituden und somit die Anzahl der Resonanzen 5 pro Frequenzbereich eines dieser Kriterien. Die Anzahl der Minima in einem Frequenzbereich korreliert besonders zuverlässig mit der Masse. Der Zusammenhang kann für einen Gerätetyp empirisch bestimmt und/oder durch die Formel einer Fit-Funktion mathematisch beschrieben werden.

In einem stark vereinfachten Beispiel weist in einem bestimmten Frequenzbereich ein leerer Garraum neun Resonanzen und ein Garraum mit größerer Garraumbeladung nur zwei Resonanzen auf. Zählt man bei der vom Benutzer eingebrachten Garraumbeladung insgesamt drei Moden, so kann man rückschließen, dass die Garraumlast dominant und groß ist.

Da das Ergebnis für die Gargutmasse bei einfachem Abzählen der Moden streuen kann, werden vorzugsweise parallel auch andere Kriterien verwendet. Anschließend erfolgt insbesondere eine gemeinsame Schätzung der Masse durch einen gewichteten Mittelwert, wobei die Gewichte sich z. B. aus den Kehrwerten der Varianzen ergeben.

Die weiteren Kriterien beruhen beispielsweise darauf, dass bei größer werdender Garraumlast der Amplitudenverlauf über die Frequenz zunehmend "stabiler" bzw. "unaufgeregter" ist. Ein solches Verhalten kann durch entsprechende Ableitungen ausgedrückt werden.

Die verwendeten Kriterien sind zum Beispiel die Anzahl der Betragsminima bzw. Anzahl der Moden und/oder eine Differentialrechnung des Amplitudenverlaufs als Funktion der Frequenz. Letztere kann z. B. das Betragsmaximum der ersten Ableitung sein, da die Steigung insbesondere der Schärfe einer Mode entspricht und/oder der Mittelwert der Ableitung sein. Weitere Kriterien sind z. B. die Varianz der Mittelwertbildung des Amplitudenverlaufs und/oder Phasenverlaufs als Funktion der Frequenz. Als Kriterien sind auch möglich die Frequenzbreite der Resonanzen 5 bzw. Moden und/oder die Frequenzverschiebung der Minima im Funktionsverlauf.

In einer beispielhaften Messung im Messbereich von 2,4 bis 2,5 GHz stehen in Abtastweite von 1 MHz zum Beispiel 101 Messwerte für den Streuparameterverlauf zur Verfügung. Hierfür kann ein Amplitudengang erstellt werden. Dieser wird vorzugsweise zunächst tiefpassgefiltert, um die Messwerte von einem Rauschen zu befreien. Danach wird insbesondere die Steigung zwischen zwei Messpunkten ermittelt, z. B. anhand der ersten Ableitung. Nun kann der Mittelwert der Beträge der einzelnen Messpunkte gebildet werden. Damit erhält man einen skalaren Wert. Dieser kann mit einer im Wesentlichen eindeutigen Abbildung in die zugehörige Masse umgerechnet werden.

Die angeführten Kriterien lassen sich auf Reflexionen und Transmissionen anwenden, d. h. in Streuparametern 5 ausgedrückt auf S11(f) beim Eintor und auf S11(f), S12(f), S21(f) und S22(f) beim Zweitor. Bei einem Zweitor stehen daher mehr auswertbare Messdaten zur Verfügung als bei einem Eintor.

Die beschriebene Messung und nachfolgende Bestimmung der Gargutmasse geschieht vorzugsweise unmittelbar nach Einbringen des Garguts in den Garraum und/oder nach Schließen der Garraumtür.

Das System kann aus der Kenngröße für die Masse auch Schätzwerte für andere Größen darstellen und zur Verfügung stellen, z. B. das Gargutvolumen, die Gardauer und/oder die Garraumtemperatur. Die Temperatur kann z. B. bei großer Masse leicht reduziert oder bei geringer Masse leicht erhöht werden.

Die Kenngröße für die Masse wird vorzugsweise auch dem Benutzer als Folge der Hochfrequenzmessung angezeigt. Sie steht insbesondere dem Benutzer als Parameterempfehlung bzw. als Voreinstellung zur Verfügung. So kann dieser einen vorgeschlagenen Wert gegebenenfalls korrigieren. So ist möglich, dass der Benutzer entscheidet, ob er die Schätzung akzeptiert oder korrigieren möchte.

Es ist möglich, dass die Behandlungseinrichtung 2 abgeschaltet wird, nachdem die anhand der Masse geschätzte Gardauer erreicht ist oder in Kürze erreicht werden würde. So kann eine Übergarung vermieden werden.

Die ermittelte Kenngröße wird besonders bevorzugt dem Benutzer angezeigt. Möglich ist ein temporäres oder ein dauerhaftes Anzeigen der Kenngröße bis hin zu einer Voreinstellung in einem Behandlungsprogramm bzw. Automatikprogramm.

### Bezugszeichenliste

- 1: Gargerät
- 2: Behandlungseinrichtung
- 3: Garraum
- 4: Streuparameter
- 5: Resonanz
- 6: Messsystem
- 12: Steuereinrichtung
- 14: Amplitude
- 16: Sendeeinrichtung
- 22: Hochfrequenzeinrichtung
- 24: Frequenz
- 26: Empfangseinrichtung
- 32: Heizeinrichtung
- 34: Frequenzbreite
- 36: Auswerteinrichtung
- 46: Antenne
- 200: Backofen, Kombigerät
- 201: Bedieneinrichtung
- 202: Tür
- 204: Gargutträger
- 300: Gargut

## Patentansprüche

1. Verfahren zum Betreiben eines Gargerätes (1), wobei Gargut mit wenigstens einer Behandlungseinrichtung (2) in wenigstens einem Garraum (3) behandelt wird und wobei die Behandlungseinrichtung (2) in Abhängigkeit wenigstens eines Behandlungsprogramms durch wenigstens eine Steuereinrichtung (12) gesteuert wird und wobei wenigstens eine charakteristische Kenngröße für eine Masse des Garguts innerhalb des Garraums (3) ermittelt wird, wobei hochfrequente Messstrahlung mit einer Mehrzahl von unterscheidbaren Frequenzen in den Garraum (3) ausgesendet und wieder empfangen und ausgewertet wird und anhand eines Vergleichs der empfangenen mit der ausgesendeten Messstrahlung frequenzabhängig wenigstens ein Streuparameter (4) erfasst wird **dadurch gekennzeichnet, dass** anhand eines frequenzabhängigen Verlaufs des Streuparameters (4) im Garraum (3) auftretende Resonanzen (5) erkannt und charakterisiert werden und daraus die charakteristische Kenngröße für die Masse des Garguts und damit korrelierenden charakteristischen Größen des Garguts ermittelt und der Steuereinrichtung (12) zur Verfügung gestellt wird.

2. Verfahren nach dem vorhergehenden Anspruch, **dadurch gekennzeichnet, dass** die erkannten Resonanzen (5) in ihrer Anzahl und/oder in wenigstens einem Parameter charakterisiert werden, wobei der Parameter wenigstens einen charakteristischen Funktionsverlauf des Streuparameters (4) als Funktion der Frequenz im Bereich der jeweiligen Resonanz (5) beschreibt.

3. Verfahren nach dem vorhergehenden Anspruch, **dadurch gekennzeichnet, dass** der zur Bestimmung der Masse herangezogene Parameter die Frequenzbreite und/oder den Frequenzbereich der jeweiligen Resonanz (5) betrifft und/oder dass der Parameter Extrema und/oder Wendestellen im frequenzabhängigen Funktionsverlauf des Streuparameters (4) im Bereich der Resonanz (5) betrifft und/oder dass der zur Bestimmung der Masse herangezogene Parameter eine Frequenzverschiebung der erkannten Resonanz (5) gegenüber einer vergleichbaren Resonanz (5) im unbeladenen Garraum (3) betrifft und/oder das der herangezogene Parameter die durchschnittliche frequenzabhängige Änderung des Funktionsverlaufes über das genutzte Frequenzband auswertet.

4. Verfahren nach einem der beiden vorhergehenden Ansprüche, **dadurch gekennzeichnet, dass** die Anzahl der Resonanzen (5) und/oder der Parameter mit wenigstens einem hinterlegten Vergleichsparameter verglichen werden und dass anhand eines Ergebnisses des Vergleichs dem Gargut die Kenngröße für die Masse zugeordnet wird.

5. Verfahren nach einem der drei vorhergehenden Ansprüche, **dadurch gekennzeichnet, dass** zur Bestimmung der Kenngröße der Masse wenigstens zwei Kriterien herangezogen werden, umfassend die Anzahl und wenigstens einen Parameter der Resonanzen (5) und/oder wenigstens zwei verschiedene Parameter der Resonanzen (5) und dass die Kriterien normiert und/oder gewichtet miteinander verrechnet werden.

6. Verfahren nach einem der vorhergehenden Ansprüche, **dadurch gekennzeichnet, dass** die Messstrahlung eine Frequenzbreite umfasst, welche eine Ausbreitung von wenigstens zehn Moden im unbeladenen Garraum (3) bietet.

7. Verfahren nach einem der vorhergehenden Ansprüche, **dadurch gekennzeichnet, dass** die Messstrahlung wenigstens zwei sich um wenigstens 100 MHz unterscheidende Frequenzen zwischen 100 Megahertz und 10 Terahertz umfasst und/oder dass die Messstrahlung eine Frequenzbreite von wenigstens 10 % der Mittenfrequenz des eingesetzten Frequenzbandes aufweist und/oder dass die Messstrahlung als wenigstens ein Impuls mit einer Impulsdauer kürzer als eine Nanosekunde ausgesendet wird.

8. Verfahren nach einem der vorhergehenden Ansprüche, **dadurch gekennzeichnet, dass** die Messstrahlung mit der Behandlungseinrichtung (2) erzeugt wird, mit welcher auch eine hochfrequente Behandlungsstrahlung zur Behandlung des Garguts und insbesondere zur dielektrischen Erwärmung des Garguts ausgesendet wird.

9. Verfahren nach einem der vorhergehenden Ansprüche, **dadurch gekennzeichnet, dass** die Kenngröße für die Masse in Kombination mit wenigstens einer weiteren Gargutkenngröße berücksichtigt wird und/oder dass anhand der Kenngröße für die Masse und wenigstens einer weiteren Gargutkenngröße wenigstens eine dritte Kenngröße wenigstens näherungsweise ermittelt wird.

10. Verfahren nach einem der vorhergehenden Ansprüche, **dadurch gekennzeichnet, dass** dem Benutzer die ermittelte Kenngröße der Masse angezeigt wird und dass die ermittelte Kenngröße der Masse wenigstens teilweise durch den Benutzer angepasst wird und dass die angepasste Kenngröße für eine Anpassung des Behandlungsprogramms berücksichtigt wird.

11. Verfahren nach einem der vorhergehenden Ansprüche, **dadurch gekennzeichnet, dass** die Ermittlung der Kenngröße für die Masse bei einem Verschließen des Garraums (3) automatisch durchgeführt wird und/oder dass bei einer ermittelten Kenngröße für die Masse unterhalb eines Schwellenwertes ein unbeladener Garraum (3) angenommen wird.

12. Verfahren nach einem der vorhergehenden Ansprüche, **dadurch gekennzeichnet, dass** während eines Behandlungsprogramms eine Vielzahl von Zyklen mit jeweils wenigstens einer Messphase und jeweils wenigstens einer Behandlungsphase ausgeführt werden und dass in der Messphase die Messstrahlung ausgesendet wird und in der Behandlungsphase eine hochfrequente Behandlungsstrahlung zur Behandlung des Garguts und insbesondere zur dielektrischen Erwärmung des Garguts ausgesendet wird.

13. Gargerät (1) mit wenigstens einer Behandlungseinrichtung (2) zur Behandlung von Gargut in wenigstens einem Garraum (3) und mit wenigstens einer Steuereinrichtung (12) zur Steuerung der Behandlungseinrichtung (2) in Abhängigkeit wenigstens eines Behandlungsprogramms, wobei mit wenigstens einem Messsystem (6) wenigstens eine charakteristische Kenngröße für eine Masse des Garguts innerhalb des Garraums (3) ermittelbar ist, wobei das Messsystem (6) dazu geeignet und ausgebildet ist, hochfrequente Messstrahlung mit einer Mehrzahl von unterscheidbaren Frequenzen in den Garraum (3) auszusenden und wieder zu empfangen und auszuwerten und das Messsystem (6) dazu geeignet und ausgebildet ist, anhand eines Vergleichs der empfangenen mit der ausgesendeten Messstrahlung frequenzabhängig wenigstens einen Streuparameter (4) zu erfassen **dadurch gekennzeichnet, dass** anhand eines frequenzabhängigen Verlaufs des Streuparameters (4) im Garraum (12) auftretende Resonanzen (5) zu erkennen und zu charakterisieren und daraus die charakteristische Kenngröße für die Masse des Garguts zu ermitteln und der Steuereinrichtung (12) zur Verfügung zu stellen.

## Claims

1. Method for operating a cooking appliance (1), food to be cooked being treated using at least one treatment device (2) in at least one cooking chamber (3), and the treatment device (2) being controlled by at least one control device (12) on the basis of at least one treatment program, and at least one characteristic variable for a mass of the food to be cooked inside the cooking chamber (3) being determined, high-frequency measuring radiation which has a plurality of distinguishable frequencies being emitted into the cooking chamber (3), received again and evaluated, and at least one scattering parameter (4) being detected in a frequency-dependent manner with reference to a comparison of the received measuring radiation with the emitted measuring radiation, **characterised in that**, with reference to a frequency-dependent curve of the scattering parameter (4), resonances (5) occurring in the cooking chamber (3) are identified and characterised, and the characteristic variable for the mass of the food to be cooked and characteristic sizes of the food to be cooked that correlate thereto are determined from said resonances and provided to the control device (12).

2. Method according to the preceding claim, **characterised in that** the identified resonances (5) are **characterised in** terms of the number thereof and/or at least one parameter, the parameter describing at least one characteristic function curve of the scattering parameter (4) as a function of the frequency in the range of the relevant resonance (5).

3. Method according to the preceding claim, **characterised in that** the parameter used to determine the mass relates to the frequency width and/or the frequency range of the relevant resonance (5), and/or **in that** the parameter relates to extremes and/or turning points in the frequency-dependent function curve of the scattering parameter (4) in the range of the resonance (5), and/or **in that** the parameter used to determine the mass relates to a frequency shift of the identified resonance (5) compared to a comparable resonance (5) in an empty cooking chamber (3), and/or **in that** the parameter which is used evaluates the average frequency-dependent change in the function curve over the frequency band used.

4. Method according to either of the two preceding claims, **characterised in that** the number of resonances (5) and/or the parameters are compared with at least one stored comparison parameter, and **in that** the characteristic variable for the mass is assigned to the food to be cooked with reference to a result of the comparison.

5. Method according to any of the three preceding claims, **characterised in that** at least two criteria are used to determine the characteristic variable of the mass, the criteria comprising the number and at least one parameter of the resonances (5) and/or at least two different parameters of the resonances (5), and **in that** the criteria are offset against one another so as to be standardised and/or weighted.

6. Method according to any of the preceding claims, **characterised in that** the measuring radiation comprises a frequency width which offers a propagation of at least ten modes in the empty cooking chamber (3).

7. Method according to any of the preceding claims, **characterised in that** the measuring radiation comprises at least two frequencies between 100 megahertz and 10 terahertz that differ by at least 100 MHz and/or **in that** the measuring radiation has a frequency width of at least 10% of the centre frequency of the frequency band used, and/or **in that** the measuring radiation is emitted as at least one impulse which has an impulse duration that is shorter than a nanosecond.

8. Method according to any of the preceding claims, **characterised in that** the measuring radiation is generated by the treatment device (2), by means of which a high-frequency treatment radiation for treating the food to be cooked, and in particular for dielectrically heating the food to be cooked, is also emitted.

9. Method according to any of the preceding claims, **characterised in that** the characteristic variable for the mass is taken into account in combination with at least one further characteristic variable of the food to be cooked, and/or **in that** at least one third characteristic variable is at least approximately determined with reference to the characteristic variable for the mass and to at least one further characteristic variable of the food to be cooked.

10. Method according to any of the preceding claims, **characterised in that** the determined characteristic variable of the mass is displayed to the user, and **in that** the determined characteristic variable of the mass is at least partially adapted by the user, and **in that** the adapted characteristic variable is taken into account for an adaptation of the treatment program.

11. Method according to any of the preceding claims, **characterised in that** the characteristic variable for the mass is determined automatically when the cooking chamber (3) is closed and/or **in that** the cooking chamber (3) is assumed to be empty when a determined characteristic variable for the mass is below a threshold value.

12. Method according to any of the preceding claims, **characterised in that** a plurality of cycles each having at least one measurement phase and at least one treatment phase are carried out during a treatment program, and **in that** the measuring radiation is emitted in the measurement phase, and a high-frequency treatment radiation for treating the food to be cooked, and in particular for dielectrically heating the food to be cooked, is emitted in the treatment phase.

13. Cooking appliance (1) comprising at least one treatment device (2) for treating food to be cooked in at least one cooking chamber (3), and comprising at least one control device (12) for controlling the treatment device (2) on the basis of at least one treatment program, it being possible, using at least one measuring system (6), to determine at least one characteristic variable for a mass of the food to be cooked inside the cooking chamber (3), the measuring system (6) being suitable and designed for emitting high-frequency measuring radiation which has a plurality of distinguishable frequencies into the cooking chamber (3), receiving said radiation again and evaluating it, and the measuring system (6) being suitable and designed for detecting at least one scattering parameter (4) in a frequency-dependent manner with reference to a comparison of the received measuring radiation with the emitted measuring radiation, **characterised in that**, with reference to a frequency-dependent curve of the scattering parameter (4), resonances (5) occurring in the cooking chamber (12) are detected and characterised, and the characteristic variable of the mass of the food to be cooked is determined therefrom and provided to the control device (12).

## Revendications

1. Procédé de fonctionnement d'un appareil de cuisson (1), l'aliment à cuire étant traité à l'aide d'au moins un dispositif de traitement (2) dans au moins une enceinte de cuisson (3) et le dispositif de traitement (2) étant commandé par au moins un dispositif de commande (12) en fonction d'au moins un programme de traitement et au moins une valeur caractéristique pour une masse de l'aliment à cuire étant déterminée dans l'enceinte (3), un rayonnement de mesure haute fréquence présentant une pluralité de fréquences distinctes étant émis dans l'enceinte de cuisson (3) et étant reçus à nouveau et évalués, et au moins un paramètre de diffusion (4) étant détecté en fonction de la fréquence sur la base d'une comparaison du rayonnement de mesure reçu avec le rayonnement de mesure émis, **caractérisé en ce que** des résonances (5) se produisant dans l'enceinte de cuisson (3) sont détectées et caractérisées sur la base d'une progression dépendant de la fréquence du paramètre de diffusion (4), et **en ce que** la valeur caractéristique de la masse de l'aliment à cuire et les valeurs caractéristiques corrélatives de l'aliment à cuire sont déterminées à partir de ces résonances et mises à disposition du dispositif de commande (12).

2. Procédé selon la revendication précédente, **caractérisé en ce que** les résonances (5) détectées sont **caractérisées par** leur nombre et/ou par au moins un paramètre, le paramètre décrivant au moins une progression fonctionnelle caractéristique du paramètre de diffusion (4) en fonction de la fréquence dans la plage de résonance (5) respective.

3. Procédé selon la revendication précédente, **caractérisé en ce que** le paramètre utilisé pour déterminer la masse se rapporte à la largeur de fréquence et/ou à la plage de fréquence de la résonance (5) respective et/ou **en ce que** le paramètre se rapporte à des extrêmes et/ou des points d'inflexion dans la progression fonctionnelle dépendant de la fréquence du paramètre de diffusion (4) dans la plage de la résonance (5) et/ou **en ce que** le paramètre utilisé pour déterminer la masse se rapporte à un décalage de fréquence de la résonance (5) détectée par rapport à une résonance (5) comparable dans l'enceinte de cuisson (3) non chargée et/ou **en ce que** le paramètre utilisé évalue la variation moyenne de la progression fonctionnelle dépendant de la fréquence sur la bande de fréquences utilisée.

4. Procédé selon l'une des deux revendications précédentes, **caractérisé en ce que** le nombre de résonances (5) et/ou des paramètres sont comparés avec au moins un paramètre de comparaison mémorisé, et **en ce que** la valeur caractéristique de la masse est associée à l'aliment à cuire sur la base d'un résultat de la comparaison.

5. Procédé selon l'une des trois revendications précédentes, **caractérisé en ce qu'**au moins deux critères sont utilisés pour déterminer la valeur caractéristique de la masse, comprenant le nombre et au moins un paramètre des résonances (5) et/ou au moins deux paramètres différents des résonances (5), et **en ce que** les critères sont normalisés et/ou pondérés.

6. Procédé selon l'une des revendications précédentes, **caractérisé en ce que** le rayonnement de mesure comprend une largeur de fréquence qui permet une propagation d'au moins dix modes dans l'enceinte de cuisson (3) non chargée.

7. Procédé selon l'une des revendications précédentes, **caractérisé en ce que** le rayonnement de mesure comprend au moins deux fréquences différant d'au moins 100 MHz entre 100 mégahertz et 10 térahertz et/ou **en ce que** le rayonnement de mesure a une largeur de fréquence d'au moins 10 % de la fréquence centrale de la bande de fréquences utilisée et/ou **en ce que** le rayonnement de mesure est émis sous la forme d'au moins une impulsion dont la durée est inférieure à une nanoseconde.

8. Procédé selon l'une des revendications précédentes, **caractérisé en ce que** le rayonnement de mesure est généré à l'aide du dispositif de traitement (2), lequel dispositif de traitement permet également d'émettre un rayonnement de traitement haute fréquence pour le traitement de l'aliment à cuire et en particulier pour le chauffage diélectrique de l'aliment à cuire.

9. Procédé selon l'une des revendications précédentes, **caractérisé en ce que** la valeur caractéristique de la masse est prise en compte en combinaison avec au moins une autre valeur caractéristique de l'aliment à cuire et/ou **en ce qu'**au moins une troisième valeur caractéristique est déterminée au moins de manière approximative sur la base de la valeur caractéristique de la masse et d'au moins une autre valeur caractéristique de l'aliment à cuire.

10. Procédé selon l'une des revendications précédentes, **caractérisé en ce que** la valeur caractéristique déterminée de la masse est affichée à l'utilisateur, **en ce que** la valeur caractéristique déterminée de la masse est au moins partiellement adaptée par l'utilisateur, et **en ce que** la valeur caractéristique adaptée est prise en compte pour une adaptation du programme de traitement.

11. Procédé selon l'une des revendications précédentes, **caractérisé en ce que** la détermination de la valeur caractéristique de la masse s'effectue automatiquement lors de la fermeture de l'enceinte de cuisson (3) et/ou **en ce qu'**une enceinte de cuisson (3) non chargée est prévue pour une valeur caractéristique déterminée de la masse inférieure à un seuil.

12. Procédé selon l'une des revendications précédentes, **caractérisé en ce qu'**une pluralité de cycles comportant chacun au moins une phase de mesure et au moins une phase de traitement sont réalisés pendant un programme de traitement, **en ce que** le rayonnement de mesure est émis dans la phase de mesure et **en ce qu'**un rayonnement de traitement haute fréquence est émis dans la phase de traitement pour le traitement de l'aliment à cuire et en particulier pour le chauffage diélectrique de l'aliment à cuire.

13. Appareil de cuisson (1) comportant au moins un dispositif de traitement (2) pour le traitement de l'aliment à cuire dans au moins une enceinte de cuisson (3) et au moins un dispositif de commande (12) pour la commande du dispositif de traitement (2) en fonction d'au moins un programme de traitement, au moins une valeur caractéristique d'une masse de l'aliment à cuire dans l'enceinte de cuisson (3) pouvant être déterminée à l'aide d'au moins un système de mesure (6), le système de mesure (6) étant adapté et conçu pour émettre un rayonnement de mesure haute fréquence présentant une pluralité de fréquences distinctes dans l'enceinte de cuisson (3), à recevoir de nouveau et à évaluer celui-ci, et le système de mesure (6) étant adapté et conçu pour détecter au moins un paramètre de diffusion (4) en fonction de la fréquence sur la base d'une comparaison du rayonnement reçu avec le rayonnement de mesure émis, **caractérisé en ce que** des résonances (5) se produisant dans l'enceinte de cuisson (12) peuvent être détectées et caractérisées sur la base d'une progression dépendant de la fréquence du paramètre de diffusion (4) et **en ce que** la valeur caractéristique de la masse de l'aliment à cuire peut être déterminée et mise à disposition du dispositif de commande (12).
